# FASCICULE DE BREVET EUROPEEN

(11) **EP 1 976 265 B1**
(45) Date de publication et mention de la délivrance du brevet: **25.11.2009**
(21) Numéro de dépôt: 08300153.7
(22) Date de dépôt: 21.03.2008
(51) Int. Cl.: H04N 3/15

(54) **Capteur d'image apte à fonctionner dans un mode de sous résolution**
Bildsensor, der in der Lage ist, in einem Modus unter der Normauflösung zu funktionieren
Image sensor capable of operating in a sub-resolution mode

(30) Priorité: 26.03.2007 FR 0754030
(43) Date de publication de la demande: 01.10.2008
(73) Titulaire: Commissariat à l'Energie Atomique, 75015 Paris (FR)
(72) Inventeur: Verdant, Arnaud, 38120 La Tour du Pin (FR)
(74) Mandataire: Palix, Stéphane

(56) Documents cités:
- US-A1- 2004 141 074
- US-A1- 2005 128 327

## Description

### DOMAINE DE L'INVENTION

L'invention concerne le domaine des capteurs électroniques d'images, et plus précisément les capteurs matriciels à base de technologie CMOS. Elle vise plus particulièrement une nouvelle architecture d'un capteur d'image, destiné à permettre le fonctionnement en mode de sous résolution, et ce en conservant une grande sensibilité.

En effet, le fonctionnement en mode de sous résolution permet d'élaborer des images correspondant à un volume de données réduit, requérant de moindres temps de calcul pour les opérations de traitement, en particulier les opérations de détection de mouvements.

### ETAT ANTERIEUR DE LA TECHNIQUE

De manière générale, les capteurs d'images électroniques comportent un ensemble de cellules élémentaires, arrangées sous forme matricielle et incluant chacune un élément photosensible dont l'exposition à un rayonnement lumineux provoque la génération d'un courant électrique.

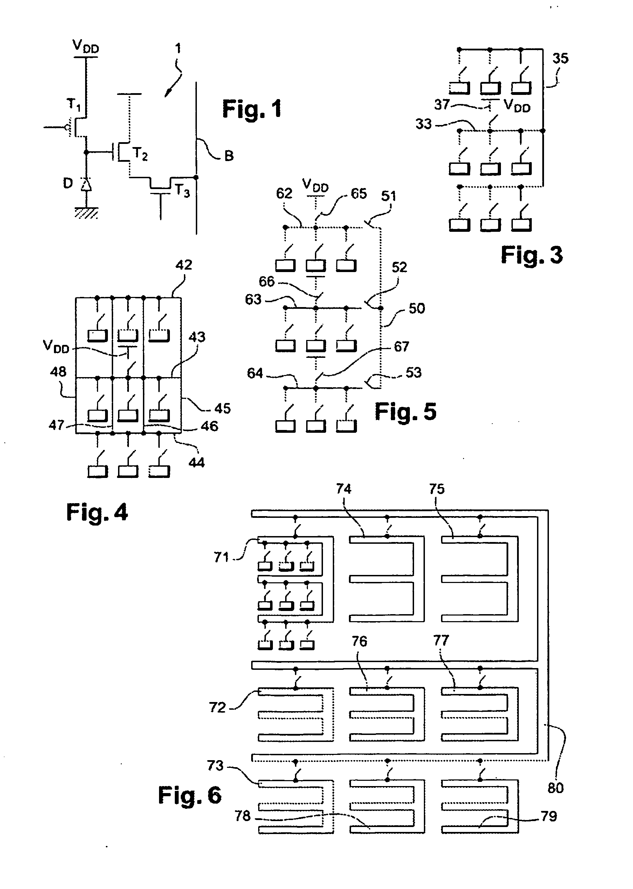

Plus précisément, et comme illustré à la figure 1, chaque cellule (1) peut comporter dans sa version la plus simplifiée trois transistors (T1, T2, T3) et une diode photosensible (D), selon une architecture communément appelée "3T". La capture de l'image se fait à une fréquence de trame donnée par l'intégration de l'information photonique au niveau de chaque diode (D) de chaque cellule. Au début de chaque période, la diode photosensible (D) est pré-chargée à une tension de référence, par l'intermédiaire du transistor (T1), également appelé transistor de *«reset*», qui lorsqu'il est commandé de façon appropriée, permet de relier la cathode de la diode (D) à une source de tension de référence (V_{DD}). A la fin de l'intégration, le transistor (T3) permet la sélection de la cellule considérée. Lorsque ce transistor est passant, la tension de la diode photosensible est extraite sur le bus (B) de colonne via le transistor (T2) servant d'adaptateur d'impédance. Une telle cellule (1) ou pixel présente l'intérêt de ne comporter que trois transistors, de sorte que le facteur de remplissage de la photodiode reste élevé, dans la mesure où les autres composants du pixel n'occupent qu'un volume limité.

Par ailleurs, il est connu que les capteurs d'images peuvent être utilisés selon un mode de sous résolution, signifiant que le capteur délivre une image dans laquelle les intensités lumineuses détectées par chacun des pixels sont moyennées en regroupant les pixels par sous-ensembles, de manière à délivrer une image comportant un nombre global de pixels réduit.

Différentes techniques sont connues pour assurer ce moyennage directement au niveau de sous-groupes de pixels, également appelés macro pixels.

Selon une première technique, la matrice de pixels est associée à un banc de capacités implanté en extrémité de la matrice, chaque capacité de banc étant reliée à une colonne de la matrice. A la fin de l'étape de lecture, la moyenne des tensions délivrées par un ensemble de pixels élémentaires sélectionnés est effectuée par la connexion de ce sous ensemble de pixels à une capacité du banc de moyennage. Des exemples de ce type de fonctionnements sont décrits en particulier dans le document « Multiresolution Image Sensor », IEEE Transaction on circuits and systems for video technology volume 7, n° 4, August 1997, ou bien US 6 839 452.

Cette technique présente toutefois l'inconvénient de nécessiter des composants supplémentaires à ceux des pixels, à savoir le banc de capacité, qui est situé en dehors de la matrice de pixels. La présence de ce banc de capacité augmente donc le volume du capteur, et surtout induit une dissipation d'énergie due aux courants qui transitent sur le bus de colonne en dehors de l'opération de moyennage. En outre, chaque pixel se trouve à une distance du banc de capacité qui dépend de sa position dans la matrice, de sorte que la longueur du bus parcourue peut induire de légères variations dans la moyenne obtenue.

Une autre technique pour assurer le moyennage consiste à effectuer le partage de charges entre pixels voisins, par la mise en parallèle des diodes photosensibles de sous ensembles de pixels. Ainsi, le document « Mutliresolution CMOS Image Sensor », Technical digest of SPIE Opto-Canada 2002, Ottawa, Ontario, Canada 9, 10 mai 2002, page 425 décrit une architecture de pixels permettant d'effectuer cette opération de moyennage. Plus précisément, chaque pixel comporte une capacité MOS de stockage, qui est alimentée par la photodiode, et qui peut être reliée aux pixels voisins au moyen de transistors supplémentaires prévus à cet effet.

Une technique analogue est décrite dans le document US 2004/0095492. Cette technique s'affranchit des contraintes évoquées pour les solutions des bancs de capacité situés en extrémité de colonne. Toutefois, cette solution n'est pas totalement satisfaisante, dans la mesure où les pixels incluent plusieurs transistors supplémentaires, nécessaires pour la mise en connexion avec les pixels adjacents. Ainsi, l'augmentation du nombre de transistors augmente la complexité d'un tel capteur. En outre, la surface de semi conducteur occupée par ces transistors supplémentaires diminue d'autant, à volume de capteurs global équivalent, le facteur de remplissage de la photodiode, et donc la sensibilité du capteur. En outre, de par la connexion des pixels entre eux au moyen de transistors complémentaires, seule la liaison avec les pixels directement adjacents selon un motif prédéterminé est possible.

On connaît du document US-A-2005/0128327 un capteur selon le préambule de la revendication 1.

### EXPOSE DE L'INTENTION

Un des objectifs de l'invention est de fournir un capteur d'image qui permette de fonctionner en mode de sous résolution, en effectuant donc la moyenne des charges générées par plusieurs pixels, sans nécessiter l'emploi de nombreux composants supplémentaires, ni augmenter la consommation électrique de façon sensible. Un autre objectif de l'invention est de permettre le fonctionnement en mode de sous résolution tout en conservant des tailles de pixels réduites et ce en gardant une sensibilité élevée, de par un facteur de remplissage optimum.

L'invention concerne donc un capteur d'images apte à fonctionner dans un mode de sous résolution, comportant une pluralité de pixels, formés chacun d'une cellule élémentaire incluant une diode photosensible, et un transistor de reset permettant la connexion de la diode photosensible à une source de tension de référence, les cellules élémentaires étant regroupées en sous-ensembles formant des macropixels, chaque sous-ensemble comportant une connexion électrique commune, à laquelle chaque cellule élémentaire est apte à se connecter par son transistor de reset, de manière à permettre le partage des charges entre les diodes photosensibles des cellules élémentaires dudit sous-ensemble, ladite connexion électrique commune étant apte à être reliée à la source de tension de référence.

Conformément à l'invention, ce capteur se caractérise en ce que :
- chaque pixel comporte seulement un circuit de lecture relié à un bus colonne pour permettre l'acquisition de la valeur de la charge de la diode photosensible ; et
- la photodiode est reliée au circuit de lecture par un autre moyen que le transistor de reset.

Autrement dit, l'invention consiste à réaliser des macropixels qui incluent un circuit de partage de leurs charges, auquel chacun des pixels élémentaires se connectent par l'intermédiaire de son transistor de *reset*. Cette connexion commune permet donc d'une part de partager les charges lorsque l'on souhaite effectuer un moyennage en mode de sous résolution. Ce même circuit, lorsqu'il est relié à la source de tension de référence, permet d'assurer la recharge de chacune des photodiodes par une activation de chacun des transistors de *reset* des pixels considérés. On notera donc que le moyennage au niveau des macropixels s'effectue en utilisant des pixels de configuration standard, c'est-à-dire avec un nombre de transistors limité, typiquement égal à trois, voire quatre, pour les architectures communément appelées 3T ou 4T. Seul un transistor supplémentaire est nécessaire pour assurer la connexion du circuit commun de partage de charges du macropixel à la source de tension de référence. On notera également que la connexion électrique commune, par laquelle s'effectue le partage des charges, peut adopter des géométries très variables, de manière à réaliser des macropixels de n'importe quelle forme, par opposition aux macropixels connus de l'art antérieur de forme principalement rectangulaire.

En d'autres termes, la possibilité de fonctionner en mode de sous résolution se fait sans modifier substantiellement le facteur de remplissage de la photodiode, puisqu'un seul transistor est nécessaire par macropixel.

Avantageusement en pratique, le circuit de lecture peut comprend un transistor suiveur, ou de façon plus générale, tout montage permettant de détecter l'information relative à la charge de la photodiode, malgré la faible capacité propre de cette dernière.

Dans une forme préférée, le circuit de lecture comprend un transistor de sélection, relié au bus colonne.

En pratique, les connexions électriques communes formant les circuits de décharge d'un macropixel peuvent être réalisées selon différentes variantes.

Ainsi dans une première forme de réalisation, les connexions électriques communes peuvent comporter une pluralité de pistes parallèles auxquelles se connectent des cellules élémentaires appartenant à une même ligne ou une même colonne de la matrice de pixels. Ces pistes sont ainsi reliées entre elles par une piste de liaison qui leur est sensiblement perpendiculaire. Cette piste de liaison peut être ainsi disposée en bordure du macropixel, ou en variante, au centre du macropixel.

Dans une autre variante de réalisation, chaque macropixel peut comporter plusieurs pistes de liaison, reliant les pistes parallèles affectées chacune à une ligne ou une colonne. En d'autres termes, on crée ainsi un réseau maillé, permettant de réduire la résistance globale du circuit commun de partage des charges entre deux diodes. En d'autres termes, on réalise ainsi un maillage autour des pixels, de façon à paralléliser les résistances de chacune des branches du réseau de partage de charges. On réduit également par la même occasion la résistance équivalente entre la source de tension de référence et les transistors de *reset.*

Dans une autre variante de réalisation, les différentes pistes parallèles du circuit commun de partage de charges à l'intérieur d'un macropixel peuvent être reliées à la piste de liaison commune éventuellement par l'intermédiaire d'un transistor supplémentaire. Dans ce cas, chacune des lignes ou colonnes affectée à une piste peut être reliée individuellement à la source de tension de référence. Cette configuration permet de réduire la chute de tension lorsque les photodiodes sont rechargées, puisqu'elle limite la longueur de la piste séparant chacun des pixels par rapport à la source de tension de référence. Autrement dit, cette variante consiste à agencer une connexion à la source de tension de référence par ligne.

Comme déjà évoqué, compte tenu du fait que les circuits de charge sont réalisés par des pistes au sein de la puce comprenant le capteur, ces réseaux peuvent adopter des formes très variables, en fonctions des caractéristiques souhaitées. Il est ainsi possible de réaliser des macropixels qui présentent une configuration rectangulaire, ou bien encore s'étendant selon une direction diagonale à la matrice. Il est également possible de réaliser des formes plus spécifiques, par exemple permettant un partage de charges sur une zone sensiblement circulaire ou polygonale, forme qui peut être plus adaptée pour assurer des fonctions spécifiques relatives à la morphologie mathématique par exemple.

Selon une autre caractéristique de l'invention, le capteur peut comporter des connexions électriques supplémentaires, à chacune desquelles sont aptes à être connectées à des connexions électriques communes de plusieurs sous-ensembles de cellules élémentaires. Autrement dit, il est possible de réaliser des réseaux de partage de charge d'un niveau hiérarchique supérieur auquel peuvent se connecter les réseaux de partage de charges de plusieurs macropixels. En d'autres termes, il est ainsi possible de réaliser des réseaux de partage entre plusieurs macropixels, de manière à générer ainsi des macropixels de taille supérieure. Ainsi, la profondeur de sous résolution peut être ajustée à volonté. Bien entendu, le même principe peut être appliqué pour réaliser une imbrication de réseau de façon récursive sur différents niveaux, de manière à choisir la taille des macropixels, et le niveau de sous résolution.

### BREVE DESCRIPTION DES DESSINS

La manière dont l'invention peut être réalisée et les avantages qui en découlent ressortiront bien de la description des exemples de réalisation qui suivent, à l'appui des figures annexées données à titre indicatif et non limitatif dans lesquelles :
- la figure 1 est un schéma électrique simplifié montrant la constitution d'un pixel élémentaire ;
- la figure 2 est un schéma simplifié représentant une fraction d'un capteur d'image selon l'invention ;
- les figures 3 à 5 sont des schémas simplifiés d'un macropixel montrant plusieurs variantes de réalisation d'un circuit de décharge commun ;
- La figure 6 est une vue schématique d'un macropixel constitué de neuf macropixels de taille inférieure ;

### DESCRIPTION DETAILLEE DE L'INVENTION

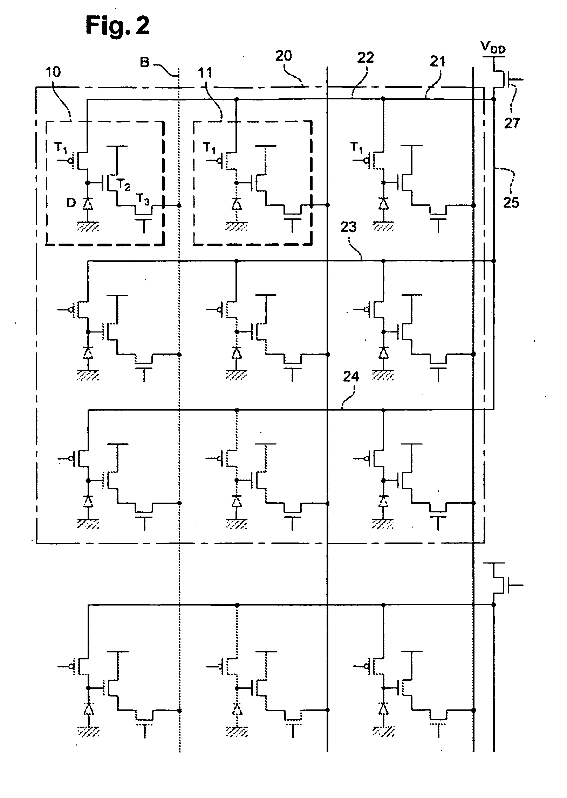

De façon classique, le capteur d'images conforme à l'invention comporte comme illustré à la figure 2, une pluralité de pixels élémentaires (10), (11) illustrés par des zones en traits pointillés. Chaque pixel élémentaire comporte une diode photosensible (D) dont la cathode est reliée à la grille d'un transistor suiveur (T₂) assurant la fonction de conversion de la charge de la photodiode en un courant. Ce transistor suiveur débite, lorsque le transistor de sélection (T₃) est passant, dans un bus de colonne (B₁).

Conformément à l'invention, les différents pixels élémentaires sont regroupés par sous-ensembles, de manière à définir des macropixels (20), qui dans la forme illustrée regroupent neuf pixels élémentaires.

Plus précisément, chaque macropixel comporte une connexion électrique commune, ou réseau de partage de charges (21). Dans la forme illustrée à la figure 2, ce réseau (21) est formé de trois pistes (22), (23), (24) parallèles aux lignes de pixels et reliées au niveau d'une extrémité par une piste de liaison (25) parallèles à une colonne. Ainsi, chaque pixel est relié à ce réseau de partage par son transistor de *reset* (T₁).

Complémentairement, ce réseau de partage de charges (21) peut être relié à la source de tension de référence (V_{DD}) par l'intermédiaire d'un transistor (27) spécifique au macropixel (10).

Ainsi, lorsque le capteur fonctionne en mode de haute résolution, ce transistor (27) est passant, de sorte que le réseau de partage de charges (21) se trouve au potentiel de la source de tension de référence (V_{DD}). Par une commande appropriée des transistors de *reset* (T₁) de chacun des pixels du macropixel, les photodiodes sont rechargées, avant de procéder à l'acquisition. Chacun des transistors de liaison (T₃) au bus colonne est ouvert Dans une deuxième phase, après recharge des photodiodes, les transistors de *reset* (T₁) sont ouverts de telle sorte que l'intégration individuelle de l'intensité lumineuse est alors effectuée pour chaque pixel. La charge évolue ainsi au niveau des diodes photosensibles (D) de façon individuelle.

Puis, à la fin de l'intégration, les transistors de sélection (T₃) permettant la connexion au bus colonne (B) de chaque pixel sont fermés chacun à leur tour, afin que l'information captée au niveau de chaque pixel soit transmise de façon multiplexée sur chaque bus de colonne.

A l'inverse, lorsque le capteur fonctionne en mode de sous résolution, les transistors de *reset* (T₁) sont fermés pour tous les pixels du macropixel. Dans un premier temps, l'ensemble des photodiodes (D) est rechargé par la fermeture du transistor (27) liant le réseau de partage (21) à la source de transmission de référence (V_{DD}). Puis dans une deuxième phase, ce transistor (27) est ouvert. Après exposition au rayonnement lumineux, une intégration parallélisée est alors effectuée entre toutes les photodiodes des pixels du macropixel, avec partage instantané des charges des différentes photodiodes. A la fin de l'intégration, un des transistors (T₃) de liaison au bus colonne est fermé, de manière à permettre l'acquisition de la valeur de charge. Comme chaque pixel possède la même information commune au niveau du macropixel, l'acquisition au niveau d'un seul pixel élémentaire est suffisante.

Comme déjà dit, la géométrie du réseau de partage de charges peut être réalisée de différentes manières, en ce qui concerne sa forme, et les connexions entre ses différentes portions.

Ainsi, comme illustré à la figure 3, qui correspond à une variante de la figure 2, le transistor (37) de connexion à la source de tension de référence peut être situé non pas au niveau de la branche de liaison latérale (35), mais sur l'une des lignes, et plus particulièrement la ligne centrale (33). Dans ce cas, on limite la chute de tension entre la source d'alimentation et le pixel qui en est le plus éloigné.

Il est possible en variante, comme illustré à la figure 4, de compléter le réseau de partage par des lignes supplémentaires (45 - 48), perpendiculaires au pistes parallèles (42 - 44) aux lignes. De la sorte, on réalise un maillage qui permet de réduire la chute de tension dans ce réseau de partage de charges, entre la source de référence (V_{DD}) et les différents pixels.

Cette diminution de la résistance du circuit du partage de charge se traduit toutefois par une augmentation de sa capacité. Ainsi, ce réseau de partage est réalisé en recherchant à limiter au maximum sa capacité équivalente, pour éviter qu'elle n'influe de manière trop importante sur la capacité globale du macropixel, qui combine les capacités de chacune des photodiodes. Ainsi, de façon optimisée, lorsque l'on souhaite combiner un fonctionnement en résolution nominale et en sous résolution, il est possible de réaliser une moyenne après lecture en haute résolution nominale de chacun des pixels. Pour ce faire, un *reset* sur ce réseau de partage de charges est nécessaire avant la connexion de chacun des pixels à celui-ci par leur transistor de *reset,* dans le but d'obtenir une erreur constante dans la génération de la moyenne du macropixel. En effet, il est préférable de fixer la valeur de charge présente sur ce bus pour éviter la prise en compte d'une charge aléatoire qui serait stockée dans ce réseau de partage de charges.

Dans une variante illustrée à la figure 5, il est possible d'utiliser un transistor supplémentaire (51 - 53) de connexion en bout de piste de ligne, pour séparer le partage de charge entre pixels d'une même ligne, du partage de charges entre pixels de lignes différentes. Dans ce cas, chaque piste de ligne (62 - 64) comporte également un transistor (65 - 67) de connexion à la tension de référence. Ces transistors (65 - 67) sont actionnés de la même façon que les transistors de *reset* de chacun des pixels individuels. Cette configuration du réseau de partage des charges permet de réduire la chute de tension d'alimentation liée à la taille de la piste (62 - 64) séparant le pixel de la source de tension de référence, en ayant une source de tension de référence par ligne.

Dans une forme plus évoluée illustrée à la figure 6, le réseau de partage de charges (71 - 79) de plusieurs macropixels peut être connecté au niveau d'un réseau (80) de partage de charges de niveau supérieur. Dans ce cas, le fonctionnement au niveau d'un groupe de macropixels se fait selon le même raisonnement que celui évoqué au niveau d'un macropixel. Ainsi, lorsque le réseau de partage de charges du niveau supérieur (80) assure la connexion entre les réseaux (71 - 79) de partage de charges de plusieurs macropixels, l'ensemble de tous les macropixels considérés est parallélisé. La moyenne s'effectue alors sur cet ensemble global de pixels. Autrement dit, chaque sous-ensemble de pixels est être relié à la tension de référence (V_{dd}) par deux (ou plus) interrupteurs, un premier au niveau du sous-ensemble de pixels et un deuxième à un niveau supérieur regroupant plusieurs sous-ensembles de pixels. De façon générale, un tel raisonnement peut être réalisé de façon récursive, de manière à obtenir des niveaux de sous résolution croissant.

Bien entendu, l'invention couvre également des variantes dans lesquelles les différents pixels d'un macropixel ne sont pas disposés selon des motifs rectangulaires ou carrés. Au contraire, la création des réseaux de partage peut se faire de manière très variée, dans la mesure où elle nécessite uniquement la création de pistes reliant les pixels entre eux. Il est ainsi possible de réaliser des motifs de macropixels qui permettent de facilité en particulier les calculs d'auto corrélation, tels que décrits dans le document « Higher Order auto correlation vision chip », IEEE Transactions On Electron Devices, Volume 53, N° 8, August 2006, pages 1797-1804 .

Il ressort de ce qui précède que le capteur d'images conforme à l'invention présente l'avantage de permettre un partage de charges sans modifier sensiblement le nombre de transistors par pixel, en ajoutant seulement un transistor par macropixel. De plus, le partage de charges au sein de la matrice entre pixel n'est pas limité au plus proche voisin, car le réseau caractéristique de partage permet de connecter à distance des pixels, ce qui permet de créer des macropixels de formes complexes. En outre, la structure des macropixels permet une construction hiérarchique facilitant les fonctionnements à divers niveaux de sous-résolution.

## Revendications

1. Capteur d'images apte à fonctionner dans un mode de sous résolution, comportant une pluralité de pixels (10), (11) formés chacun d'une cellule élémentaire incluant une diode photosensible (D), et un transistor de reset (T₁) permettant la connexion de la diode photosensible (D) à une source de tension de référence (V_{DD}), les cellules élémentaires étant regroupées en sous-ensembles formant des macropixels (20), chaque sous-ensemble comportant une connexion électrique (21) commune, à laquelle chaque cellule élémentaire est apte à se connecter par son transistor de reset (T₁), de manière à permettre le partage des charges entre les diodes photosensibles (D) des cellules élémentaires dudit sous-ensemble, ladite connexion électrique commune (20) étant apte à être reliée à la source de tension de référence (V_{DD}), ***caractérisé* :**
- **en ce que** chaque pixel comporte un circuit de lecture (T₂, T₃), relié à un bus colonne pour permettre l'acquisition de la valeur de la charge de la diode photosensible (D) ; et
- **en ce que** ladite photodiode (D) est reliée au circuit de lecture (T₂,T₃) par un autre moyen que le transistor de reset (T₁).

2. Capteur selon la revendication 1 ***caractérisé* en ce que** le circuit de lecture comprend un transistor suiveur (T₂).

3. Capteur selon la revendication 1 ***caractérisé* en ce que** le circuit de lecture comprend un transistor de sélection (T₃) relié au bus colonne.

4. Capteur selon la revendication 1 ***caractérisé* en ce que** les connexions électriques communes comportent une pluralité de pistes parallèles (22), (23), (24) auxquelles se connectent des cellules élémentaires appartenant à une même ligne ou colonne, lesdites pistes étant reliées entre elles par une piste de liaison (25).

5. Capteur selon la revendication 4 ***caractérisé* en ce que** chaque sous-ensemble comporte plusieurs pistes de liaison (45 - 48) reliant les pistes affectées à une ligne ou une colonne.

6. Capteur selon la revendication 4 ***caractérisé* en ce que** la piste de liaison (50) est reliée aux pistes (62), (63), (64) affectées à une ligne ou colonne par l'intermédiaire d'un transistor (51), (52), (53).

7. Capteur selon la revendication 1 ***caractérisé* en ce que** les cellules élémentaires d'un sous-ensemble sont disposées spatialement dans une configuration rectangulaire.

8. Capteur selon la revendication 1 ***caractérisé* en ce que** les cellules élémentaires d'un sous-ensemble sont disposées spatialement selon une direction diagonale à la matrice.

9. Capteur selon la revendication 1 ***caractérisé* en ce qu'**il comporte des connexions électriques (80) à chacune desquelles sont aptes à être connectées les connections électriques communes de plusieurs sous-ensembles de cellules élémentaires.

## Claims

1. An image sensor suitable for operating in subresolution mode, comprising a plurality of pixels (10), (11) each formed of an elementary cell including a photodiode (D), and a reset transistor (T₁) for connecting the photodiode (D) to a reference voltage source (V_{DD}), the elementary cells being grouped in subsets forming macro-pixels (20), each subset comprising a common electrical connection (21), to which each elementary cell is able to connect by its reset transistor (T₁), in order to share the charges between the photodiodes (D) of the elementary cells of said subset, said common electrical connection (20) being suitable for connection to the reference voltage source (V_{DD})., ***characterized* in that** :
**in that** each pixel comprises a readout circuit (T_{2,} T₃) connected to a column bus bar for acquiring the value of the charge of the photodiode (D), and
**in that** said photodiode (D) is connected to the readout circuit (T₂, T₃) by another means than the reset transistor (T₁).

2. The sensor as claimed in claim 1, ***characterized* in that** the readout circuit comprises a follower transistor (T₂).

3. The sensor as claimed in claim 1, ***characterized* in that** the readout circuit comprises a selection transistor (T₃) connected to the column bus bar.

4. The sensor as claimed in claim 1, ***characterized* in that** the common electrical connections comprise a plurality of parallel tracks (22), (23), (24) to which elementary cells belonging to the same line or column are connected, said tracks being interconnected by a connecting track (25).

5. The sensor as claimed in claim 4, ***characterized* in that** each subset comprises a plurality of connecting tracks (45-48) connecting the tracks assigned to a line or to a column.

6. The sensor as claimed in claim 4, ***characterized* in that** the connecting track (50) is connecting to the tracks (62), (63), (64) assigned to a line or column via a transistor (51), (52), (53).

7. The sensor as claimed in claim 1, ***characterized* in that** the elementary cells of a subset are arranged spatially in a rectangular configuration.

8. The sensor as claimed in claim 1, ***characterized* in that** the elementary cells of a subset are arranged spatially in a diagonal direction to the matrix.

9. The sensor as claimed in claim 1, ***characterized* in that** it comprises electrical connections (80) to each of which the common electrical connections of a plurality of subsets of elementary cells can be connected.

## Patentansprüche

1. Bildsensor, der in der Lage ist, in einem Modus der Unterauflösung zu arbeiten, umfassend eine Mehrzahl von Pixel (10), (11), die jeweils von einer eine lichtempfindliche Diode (D) einschließenden Einzelzelle gebildet sind, und einen Reset-Transistor (T₁), der die Verbindung der lichtempfindlichen Diode (D) mit einer Bezugsspannungsquelle (V_{DD}) gestattet, wobei die Einzelzellen in Makropixel (20) bildende Untereinheiten zusammengefasst sind, wobei jede Untereinheit eine gemeinsame elektrische Verbindung (21) umfasst, an die jede Einzelzelle sich über ihren Reset-Transistor (T₁) anschließen kann, so dass die Aufteilung der Ladungen zwischen den lichtempfindlichen Dioden (D) der Einzelzellen dieser Untergruppe gestattet wird, wobei jede gemeinsame elektrische Verbindung (20) in der Lage ist, mit der Bezugsspannungsquelle (V_{DD}) verbunden zu werden, **dadurch gekennzeichnet,**
- **dass** jeder Pixel einen Lesekreis (T₂, T₃) umfasst, der mit einem Spaltenbus verbunden ist, um die Erfassung des Werts der Ladung der lichtempfindlichen Diode (D) zu gestatten, und
- **dass** diese Photodiode (D) mit dem Lesekreis (T₂, T₃) durch ein anderes Mittel als den Reset-Transistor (T₁) verbunden ist.

2. Sensor nach Anspruch 1, **dadurch gekennzeichnet, dass** der Lesekreis einen Folgetransistor (T₂) umfasst.

3. Sensor nach Anspruch 1, **dadurch gekennzeichnet, dass** der Lesekreis einen Wahltransistor (T₃) umfasst, der mit dem Spaltenbus verbunden ist.

4. Sensor nach Anspruch 1, **dadurch gekennzeichnet, dass** die gemeinsamen elektrischen Verbindungen eine Mehrzahl von parallelen Bahnen (22), (23), (24) umfassen, an die sich Einzelzellen anschließen, die zu einer gemeinsamen Zeile oder Spalte gehören, wobei diese Bahnen durch eine Verbindungsbahn (25) miteinander verbunden sind.

5. Sensor nach Anspruch 4, **dadurch gekennzeichnet, dass** jede Untereinheit mehrere Verbindungsbahnen (45 - 48) umfasst, die die einer Zeile oder Spalte zugeteilten Bahnen verbinden.

6. Sensor nach Anspruch 4, **dadurch gekennzeichnet, dass** die Verbindungsbahn (50) mit den einer Zeile oder Spalte zugeteilten Bahnen (62), (63), (64) über einen Transistor (51), (52), (53) verbunden ist.

7. Sensor nach Anspruch 1, **dadurch gekennzeichnet, dass** die Einzelzellen einer Untereinheit räumlich in einer rechteckigen Konfiguration angeordnet sind.

8. Sensor nach Anspruch 1, **dadurch gekennzeichnet, dass** die Einzelzellen einer Untereinheit räumlich in einer zur Matrix diagonalen Richtung angeordnet sind.

9. Sensor nach Anspruch 1, **dadurch gekennzeichnet, dass** er elektrische Verbindungen (80) umfasst, an deren jede die gemeinsamen elektrischen Verbindungen von mehreren Untereinheiten von Einzelzellen sich anschließen können.
